Europäisches Patentamt

**European Patent Office**

**Office européen des brevets**

(11) Numéro de publication: **0 035 942**
**B1**

(12) **FASCICULE DE BREVET EUROPEEN**

(45) Date de publication du fascicule du brevet:
**24.10.84**

(51) Int. Cl.³: **G 01 L 1/22**

(21) Numéro de dépôt: **81400350.5**

(22) Date de dépôt: **06.03.81**

(54) Dynamomètre à fil de jauge enroulé et branché dans un montage électrique en pont.

(30) Priorité: **07.03.80 FR 8005153**
**20.06.80 FR 8013727**

(73) Titulaire: **TESTUT-AEQUITAS, 8, rue Popincourt, F-75011 Paris (FR)**

(43) Date de publication de la demande:
**16.09.81 Bulletin 81/37**

(72) Inventeur: **Valadier, Jean-Claude, 124, Boulevard Auguste Blanqui, F-75013 Paris (FR)**

(45) Mention de la délivrance du brevet:
**24.10.84 Bulletin 84/43**

(74) Mandataire: **Corre, Jacques Denis Paul et al, Cabinet Regimbeau 26, Avenue Kléber, F-75116 Paris (FR)**

(84) Etats contractants désignés:
**AT BE CH DE GB IT LI LU NL SE**

(56) Documents cités:
**FR - A - 1 156 671**
**GB - A - 757 211**
**SU - A - 174 413**
**US - A - 2 698 371**
**US - A - 2 727 387**
**US - A - 2 837 620**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention concerne un dynamomètre pourvu d'un corps d'épreuve destiné à subir une déformation élastique lorsqu'une force lui est appliquée.

Elle concerne plus particulièrement un dynamomètre du type comprenant un corps d'épreuve déformable sous l'effet d'une force appliquée, ainsi que des moyens comprenant du fil de jauge dont la résistance électrique est fonction de son état de tension et destinés à détecter cette déformation du corps d'épreuve, le fil de jauge étant branché dans un montage électrique en pont.

On connaît d'après le document US-A-2 698 371 un dynamomètre du type précité où, dans la matière du corps d'épreuve, sont définies des zones d'appui aptes à recevoir quatre séries d'enroulements de fil de jauge prétendu, demeurant en contact intime avec le corps d'épreuve, dont deux possèdent des segments principaux orientés parallèlement à la force appliquée, tandis que les deux autres possèdent des segments principaux orientés perpendiculairement à la force appliquée, ces quatre séries d'enroulement formant le montage électrique en pont, les segments orientés parallèlement à la force appliquée se trouvant dans des bras opposés du montage en pont, de même que les segments orientés perpendiculairement à la force appliquée.

Un dynamomètre du même genre est décrit dans le document GB-A-757 211, étant à noter que les zones d'appui sont constituées par des broches rapportées sur le corps d'épreuve.

Pour des raisons de simplifications, les enroulements d'un tel dynamomètre peuvent être qualifiés de longitudinaux ou de transversaux selon que leurs segments principaux sont orientés parallèlement ou respectivement perpendiculairement à la force appliquée.

Dans le cas où un tel dynamomètre fonctionne à la compression, les enroulements longitudinaux sont comprimés et les enroulements transversaux sont tendus sous l'effet de la force appliquée, alors que dans le cas où le dynamomètre fonctionne à la traction, les enroulements longitudinaux sont tendus et les enroulements transversaux sont comprimés sous l'effet de la force appliquée.

La présente invention concerne un dynamomètre du genre précédemment défini et vise à améliorer la mise en place du fil de jauge et plus particulièrement l'ancrage du fil de jauge sur les zones d'appui définies dans le corps d'épreuve.

Selon l'invention telle que définie dans la revendication 1, les zones d'appui recevant les deux séries d'enroulements ayant leurs segments principaux orientés parallèlement à la force appliquée sont constituées par des épaulements circulaires usinés dans la matière du corps d'épreuve pour former un bord circulaire servant à l'ancrage du fil de jauge, de manière à permettre un ancrage aisé du fil de jauge sans risque pour l'émail de celui-ci.

Selon l'invention, le bord circulaire de l'épaulement est avantageusement réalisé avec sa génératrice inclinée sur le corps d'épreuve pour former un bord de retenue incliné. Cette caractéristique permet d'obtenir une pente de l'épaulement favorable à la mise en place du fil de jauge et aussi un angle très obtus au niveau du raccordement de cet épaulement avec le corps d'épreuve.

L'épaulement circulaire est avantageusement usiné au moyen d'un trépan annulaire qui réalise un enlèvement annulaire dans la matière du corps d'épreuve. Pour réaliser l'inclinement décrit précédemment de l'épaulement, il suffit alors de réaliser l'usinage de l'épaulement avec le trépan dont l'axe qui, tout en étant dans un même plan avec celui du corps d'épreuve, est incliné de l'angle désiré.

Le corps d'épreuve a avantageusement la forme générale d'un prisme droit ou d'un cylindre droit, dans lequel les épaulements sont usinés sur deux bords opposés dudit prisme ou cylindre, le fil de jauge passant alternativement autour d'un épaulement de l'un des bords puis autour d'un épaulement de l'autre bord pour former une série d'enroulements dont les brins principaux sont orientés parallèlement à la force appliquée.

Les épaulements des deux bords seront avantageusement disposés en quinconce de telle sorte que les brins principaux soient sensiblement parallèles à la force appliquée.

Les épaulements seront avantageusement en nombre impair sur un bord ainsi que sur l'autre bord.

D'autres caractéristiques et avantages de l'invention seront mieux compris à la lecture de la description détaillée qui va suivre et qui se réfère aux dessins annexés, donnés uniquement à titre illustratif et sur lesquels:

– la fig. 1 est une vue en élévation du corps d'épreuve d'un dynamomètre fonctionnant à la compression;

– la fig. 2 est une vue de dessus du corps d'épreuve de la fig. 1;

– la fig. 3 est une vue en élévation d'une pièce d'appui destinée à être associée au corps d'épreuve de la fig. 1;

– la fig. 4 est une vue en élévation correspondant à la fig. 1 et montrant schématiquement la disposition des séries d'enroulements sur le corps d'épreuve;

– la fig. 5 est une vue de dessus de la fig. 4;

– les figs 6 et 7 sont des vues de profil du corps d'épreuve de la fig. 4 et montrant schématiquement la disposition des séries d'enroulements;

– la fig. 8 est une représentation schématique du montage électrique en pont associé au corps d'épreuve des figs 4 à 7;

– la fig. 9 est une vue en élévation du corps d'épreuve d'un dynamomètre fonctionnant à la traction;

– la fig. 10 est une vue de dessus du corps d'épreuve de la fig. 9;

– la fig. 11 est une vue en coupe longitudinale du corps d'épreuve de la fig. 9;

– la fig. 12 est une vue partielle correspondant à la fig. 9 et montrant la disposition des quatre séries d'enroulement sur le corps d'épreuve;

– la fig. 13 est une vue schématique du montage électrique en pont associé au corps d'épreuve de la fig. 12;

– la fig. 14 est une vue en élévation avec coupe partielle du corps d'épreuve d'un autre dynamomètre fonctionnant à la traction;

– la fig. 15 est une vue en coupe, à échelle agrandie, prise suivant la ligne XV–XV de la fig. 14;

– la fig. 16 est une vue en élévation et en coupe partielle d'une enveloppe destinée à être associée au corps d'épreuve de la fig. 14;

– la fig. 17 est une vue en élévation et en coupe partielle d'un boîtier associé à l'enveloppe représentée sur la fig. 16;

– la fig. 18 est une vue partielle du corps d'épreuve de la fig. 14 montrant la disposition des séries d'enroulements formant un demi pont;

– la fig. 19 est une vue partielle montrant la disposition des séries d'enroulement formant l'autre demi pont;

– la fig. 20 est une vue de profil du corps d'épreuve d'un dynamomètre selon l'invention dont les épaulements circulaires sont en cours d'usinage au moyen d'un trépan représenté en coupe axiale;

– la fig. 21 est une vue de dessus du corps d'épreuve de la fig. 20 montrant les épaulements circulaires;

– la fig. 22 est une vue en coupe partielle suivant la ligne XXII–XXII de la fig. 21;

– la fig. 23 est une vue analogue à celle de la fig. 21 montrant la disposition des séries d'enroulements de fil de jauge sur le corps d'épreuve; et

– la fig. 24 représente schématiquement le montage électrique en pont des séries d'enroulements du corps d'épreuve de la fig. 23.

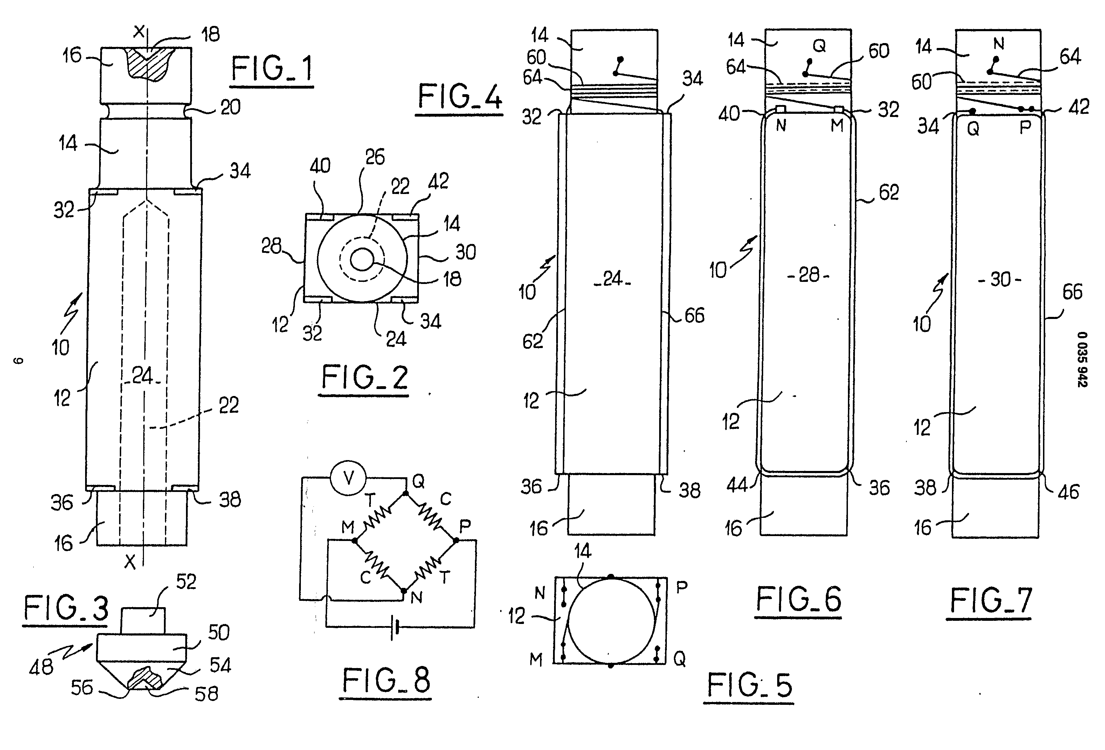

Les figs 1 à 19 de la description correspondante concernent des modes de réalisation de dynamomètres à fil qui n'appartiennent pas à l'objet de l'invention et destinés seulement à en expliquer le principe.

On a représenté sur la fig. 1 le corps d'épreuve 10 d'un dynamomètre destiné à fonctionner à la compression. Ce corps d'épreuve 10 est réalisé d'une seule pièce et comporte une partie centrale 12 en forme de prisme droit de section rectangulaire, une partie terminale supérieure 14 en forme de cylindre droit et une partie terminale inférieure 16 en forme de cylindre droit, ces trois parties étant disposées suivant un même axe XX.

La partie terminale 14 comporte une face circulaire 16 pourvue en son centre d'une encoche conique 18 et une gorge annulaire périphérique 20. Le corps d'épreuve 10 comporte en outre un alésage 22 disposé dans l'axe XX et pratiqué à travers la partie terminale 16 et la partie centrale 12. La partie centrale 12 en forme de prisme de section rectangulaire présente deux faces opposées 24 et 26 correspondant aux deux grands côtés du rectangle et deux faces opposées 28 et 30 correspondant aux deux petits côtés du rectangle (voir fig. 2). Comme on peut le remarquer sur la fig. 2, la partie terminale 14 a un diamètre correspondant au petit côté de la section rectangulaire de la partie centrale 12. Ceci permet de réaliser des portions d'arêtes sur les faces 24 et 26 pour la mise en place de séries d'enroulements longitudinaux, comme expliqué plus loin.

La face 24 de la partie centrale 12 comporte quatre portions d'arêtes adoucies 32, 34, 36 et 38 et de même la face 26 comporte quatre portions d'arêtes adoucies 40, 42, 44 et 46. Ces portions d'arêtes adoucies constituent des zones d'appui aptes à recevoir des séries d'enroulements de fil de jauge prétendu sans risquer de casser l'isolant du fil de jauge.

La partie terminale inférieure 16 du corps d'épreuve 10 est prévue pour recevoir une pièce d'appui 48 représentée sur la fig. 3. Cette pièce d'appui 48 comporte une partie centrale cylindrique 50, une portion cylindrique terminale 52 destinée à venir à l'intérieur de l'alésage 22 et une portion terminale tronconique 54 ayant une face inférieure 56 pourvue d'une encoche conique 58 analogue à l'encoche conique 18.

Les zones d'appui constituées par les portions d'arêtes adoucies décrites précédemment et par la partie terminale 14 servent à la mise en place de quatre séries d'enroulements demeurant en contact intime avec le corps d'épreuve et branchées dans un montage électrique en pont, du type pont de WHEATSTONE, tel que représenté sur la fig. 8.

Comme représenté sur les figs 4 à 7, le corps d'épreuve 10 est muni d'un premier brin de fil QMN formant un demi-pont et d'un deuxième brin de fil NPQ formant l'autre demi-pont.

Le brin QMN comporte une première série d'enroulements 60 partant du point Q sur la partie terminale 14, disposée autour de celle-ci et arrivant à un point M et une deuxième série d'enroulements 62 partant du point M passant sur les quatre arêtes 32, 36, 44 et 40 et aboutissant au point N. La série d'enroulements QM constitue un brin tendu désigné par la lettre T sur la fig. 8 et le brin MN constitue un brin comprimé désigné par la lettre C sur la fig. 8.

Le brin NPQ comporte une première série d'enroulements 64 partant du point N, disposée autour de la partie terminale 14 et aboutissant à un point P, et une deuxième série d'enroulements 66 partant du point P passant successivement autour des arêtes 42, 46, 38 et 34 pour aboutir au point Q. Le brin 64 constitue un brin tendu T et le brin 66 constitue un brin comprimé C comme représenté sur la fig. 8. Comme représenté sur la fig. 4, les brins 60 et 64 sont imbriqués les uns dans les autres autour de la partie terminale 14. Sur la fig. 6 on a représenté le brin 60 en trait plein et le brin 64 de l'autre demi-pont en trait pointillé et, inversement, sur la fig. 7 on a représenté le brin 64 en trait plein et le brin 60 de l'autre demi-pont en trait pointillé. La partie terminale 14 constitue une zone d'appui pour les séries d'enroulements 60 et 64.

Comme on le remarquera sur la fig. 8, les deux fils T sont disposés dans des bras opposés du pont, de même que les deux fils C. En dehors de toute charge appliquée au corps d'épreuve, le pont de WHEATSTONE est équilibré, c'est-à-dire que les résistances nominales des fils T (enroulements 60 et 64) et des fils C (enroulements 62 et 66) sont égales. Le montage de ces quatre roulements de façon intercalée permet d'obtenir une sensibilité maximale lors de la mesure de la différence de potentiel $V_Q-V_N$ qui doit être nulle au repos. Sa valeur, mesurée par exemple au moyen d'un voltmètre de précision V, permet de mesurer les variations cumulées des résistances C et T dues à l'effet de Poisson induit par la charge appliquée. En pratique on peut imposer une différence de potentiel de 12 volts aux bornes M et P du pont et l'on mesure la tension $V_Q-V_N$ afin d'en déduire, par étalonnage préalable la mesure de la force appliquée.

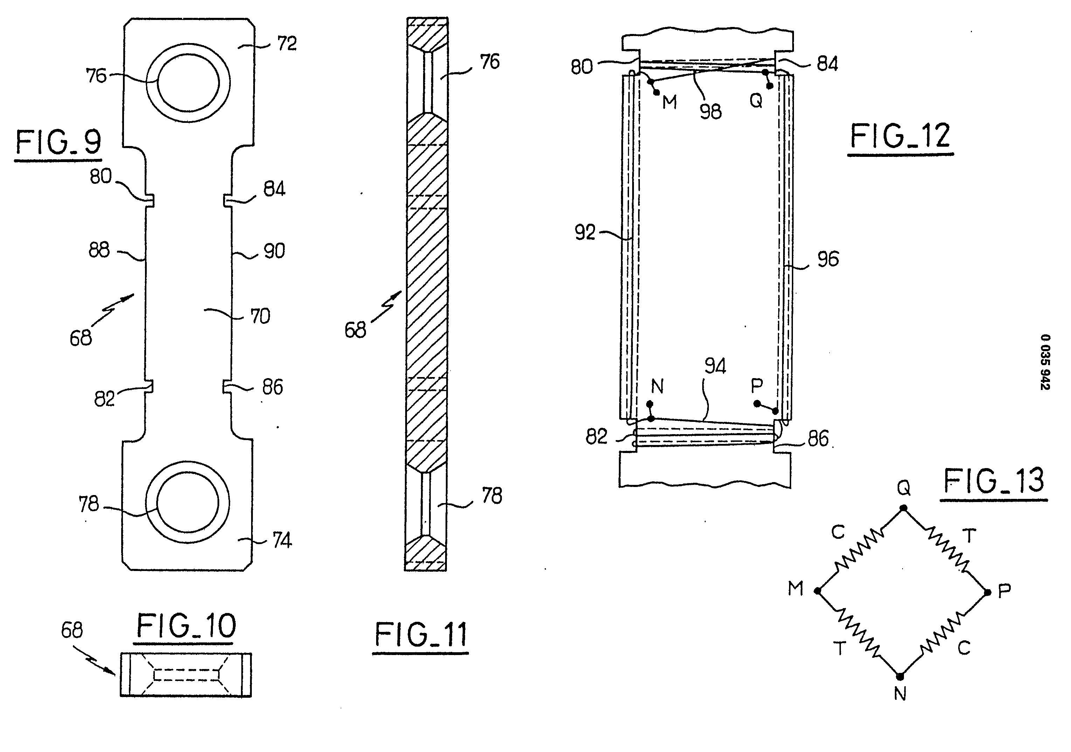

On a représenté sur la fig. 9 le corps d'épreuve 68 d'un dynamomètre destiné à fonctionner à la traction. Le corps d'épreuve 68 est réalisé d'une seule pièce et comporte une partie centrale 70 en forme de prisme droit de section rectangulaire et deux parties terminales 72 et 74 pourvues respectivement d'un orifice 76 et d'un orifice 78 permettant de relier le corps d'épreuve à un point fixe et à une charge tendant à étirer ce corps d'épreuve. Le corps d'épreuve 68 est réalisé par usinage à partir d'une plaque métallique, notamment en alliage léger, et comporte outre les orifices 76 et 78 précités, quatre évidements 80, 82, 84 et 86 formant quatre zones d'appui pour la mise en place de fils de jauge. Les évidements 80 et 82 sont pratiqués sur une face 88 constituant un petit côté de la section rectangulaire du prisme droit 70 et les évidements 84 et 86 sont pratiqués sur une face 90 opposée à la face 88 et constituant l'autre petit côté du rectangle.

Le corps d'épreuve représenté sur les figs 9 à 11 permet de réaliser un bobinage total avec un seul brin de fil.

On constitue d'abord une première série d'enroulements 92 MN en partant du point M à proximité de l'évidement 80 en introduisant le fil de jauge dans l'évidement 80 puis dans l'évidement 82 et en faisant le nombre de tours nécessaires en passant dans ces deux évidements et pour aboutir ainsi au point N. A partir du point N on forme une deuxième série d'enroulements 94 en passant dans les évidements 82 et 86 et on arrive ainsi au point P. A partir du point P on forme une troisième série d'enroulements 96 en passant par les évidements 84 et 86 de manière à arriver au point Q. A partir du point Q on forme une quatrième série d'enroulements 98 en passant autour des évidements 80 et 84.

Les séries d'enroulements 92 et 96 constituent des brins tendus T alors que les enroulements 94 et 98 constituent des brins comprimés C. Ces brins comprimés et tendus sont disposés en pont comme représenté sur la fig. 13, les brins tendus étant dans des bras opposés du pont de même que les brins comprimés.

Ce pont est associé à un voltmètre et une source de tension comme indiqué précédemment en référence aux figs 1 à 8.

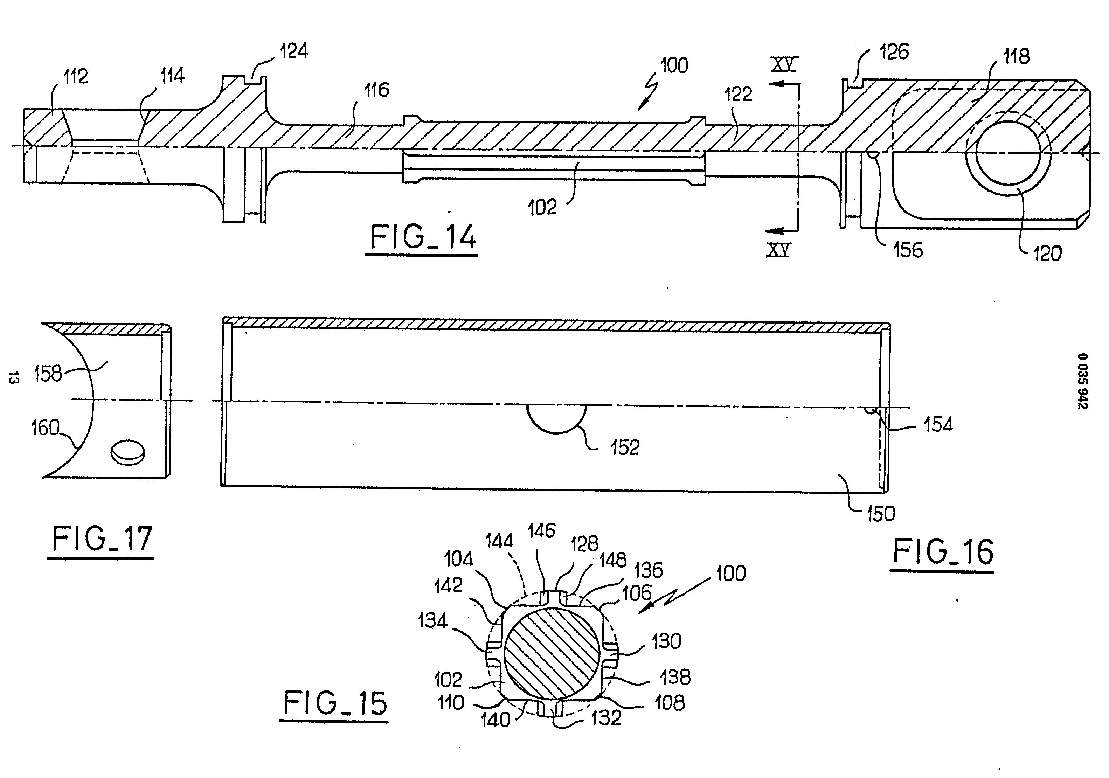

On a représenté sur la fig. 14 le corps d'épreuve 100 d'un dynamomètre destiné à fonctionner à la traction. Ce corps d'épreuve 100 comporte une partie centrale 102 affectant la forme générale d'un prisme droit de section carrée dont les quatre arêtes longitudinales 104, 106, 108 et 110 ont été abattues comme représenté sur la fig. 15. Le corps d'épreuve 100 comporte en outre une partie terminale 112 pourvue d'un orifice 114 et reliée à la partie 102 par une partie 116 de section circulaire et une partie terminale 118 pourvue d'un orifice 120 et reliée à la partie 102 par une partie 122 de section circulaire.

Les orifices 114 et 120 sont disposés de telle manière que leurs axes respectifs soient orthogonaux.

La partie 112 comporte également une gorge circulaire périphérique 124 disposée dans l'axe de la partie centrale 102 et de même la partie terminale 118 comporte une gorge périphérique circulaire 126 disposée également suivant le même axe. Ces gorges 124 et 126 sont destinées à recevoir chacune un joint torique d'étanchéité interposé entre les gorges et une enveloppe représentée sur la fig. 16.

La partie centrale 102 comporte quatre saillies longitudinales 128, 130, 132, 134 disposées respectivement sur les faces 136, 138, 140 et 142 du prisme droit constituant la partie centrale 102. Ces saillies longitudinales s'inscrivent dans un cercle représenté schématiquement par la ligne discontinue 144 sur la fig. 15. Chacune des saillies longitudinales 128, 130, 132 et 134 est arrondie à ses deux extrémités pour faciliter la mise en place de fil de jauge, comme cela sera expliqué plus loin. Ainsi, la saillie 128 présente à son extrémité visible sur la fig. 15, deux abattages d'arêtes 146 et 148.

On a représenté sur la fig. 16 une enveloppe cylindrique 150 destinée à entourer la partie centrale 102 du corps d'épreuve 100. Cette enveloppe 150 comporte un orifice 152 destiné au passage des connexions électriques et un orifice 154 destiné à la mise en place d'un arrêtoir (non représenté) apte à être introduit dans un orifice 156 de la partie terminale 118. Lorsque le corps d'épreuve 100 est allongé sous l'effet de la traction, l'enveloppe 150 peut coulisser relativement aux parties terminales 112 et 118 grâce au joint torique placé dans les gorges 124 et 126 et coopérant avec l'intérieur de l'enveloppe 150.

A ses deux extrémités, l'enveloppe 150 est pourvue de boîtiers terminaux tels 158 représentés sur la fig. 17. Ces boîtiers sont destinés à être soudés sur les bords de l'enveloppe 150 et présentent une découpe circulaire 160 destinée à être placée autour de l'orifice correspondant 114 ou 120.

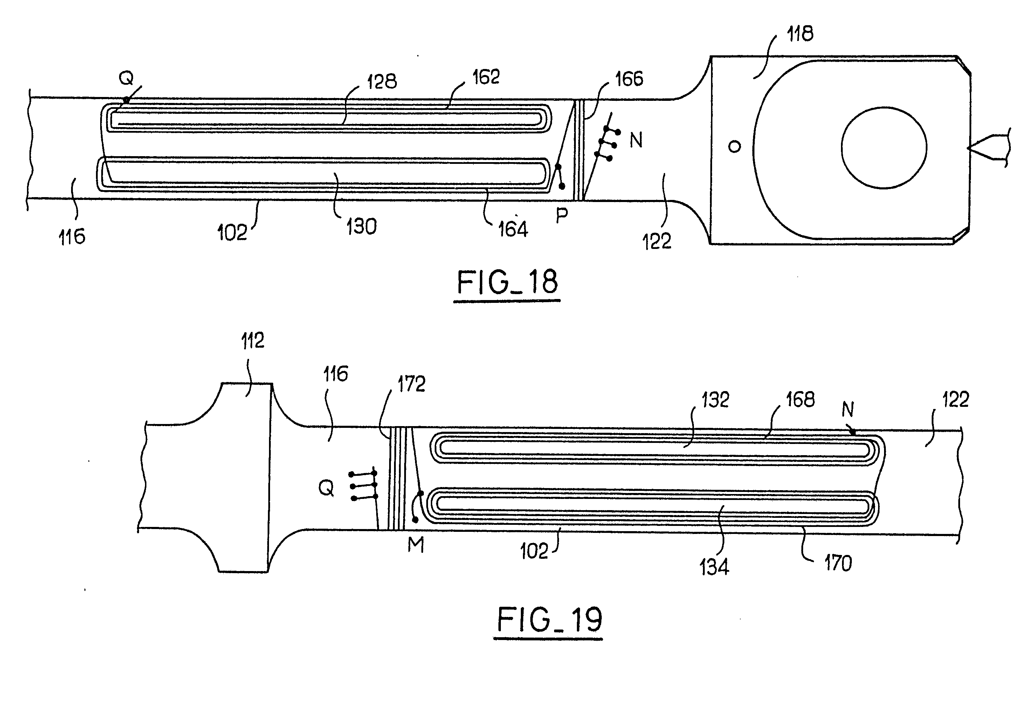

On décrira maintenant la mise en place des séries d'enroulements en référence aux figs 18 et 19. Comme représenté sur la fig. 18, les saillies 128 et 130 servent à la mise en place d'une série d'enroulements dont les segments principaux sont orientés parallèlement à la force appliquée. Cette série comporte un premier enroulement 162 autour de la saillie 128 et un deuxième enroulement 164 autour de la saillie 130. Cette première série d'enroulement est reliée en continu à une deuxième série d'enroulements constituée par un seul enroulement 166 enroulé autour de la partie 122. Ces deux séries d'enroulements forment un demi-pont constitué d'un seul brin passant par les points Q, P et N formant un demi-pont droit. Les enroulements 162 et 164 constituent des brins tendus, alors que l'enroulement 166 constitue un brin comprimé sous l'effet de la force appliquée.

De même, les saillies 132 et 134 servent à la mise en place d'une première série d'enroulements comportant un enroulement 168 autour de la saillie 132 et un enroulement 170 autour de la saillie 134. Une deuxième série d'enroulements comprenant un seul enroulement 172 est disposée autour de la partie 116. Ces deux séries d'enroulements constituent le deuxième demi-pont passant par les points NM et Q. Ce deuxième demi-pont est formé à partir d'un seul brin disposé de manière à partir du point N à faire plusieurs tours autour de la saillie 132 puis autour de la saillie 134 et enfin autour de la partie 116. Les enroulements 168 et 170 constituent des brins tendus, alors que l'enroulement 172 constitue un brin comprimé sous l'effet de la force appliquée. Les points Q, M et N peuvent être reliés de façon appropriée à un voltmètre et à une source de tension comme indiqué plus haut.

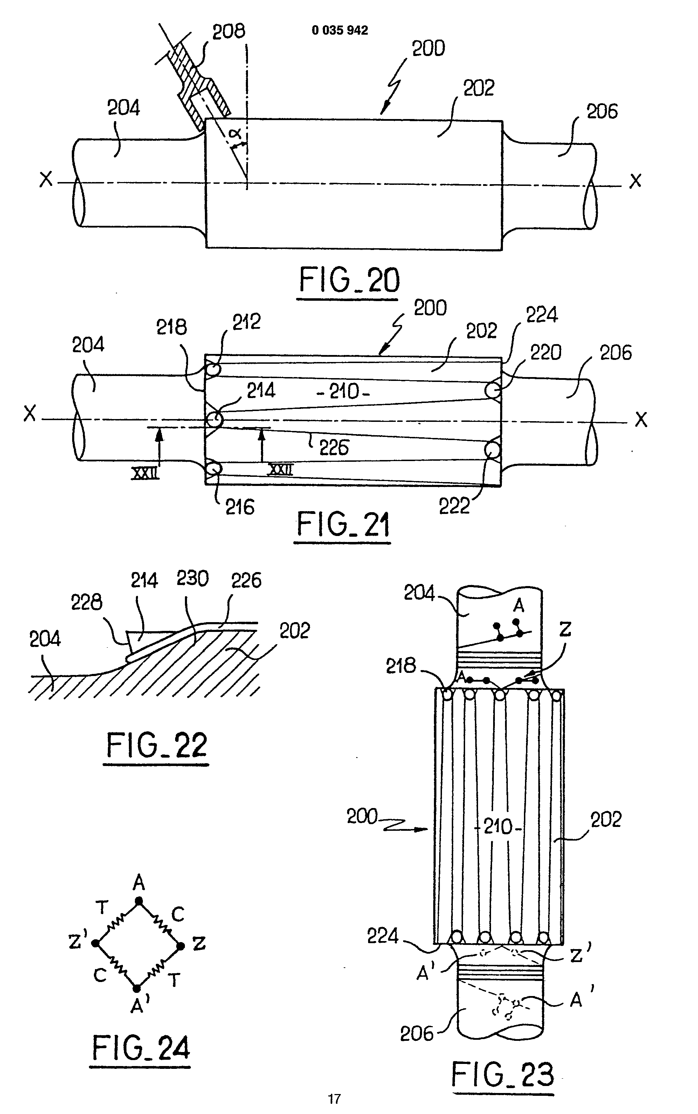

On a représenté sur la fig. 20 le corps d'épreuve 200 d'un dynamomètre destiné à fonctionner à la traction. Ce corps d'épreuve 200 est réalisé d'une seule pièce à partir d'un alliage léger anodisable et comporte une partie centrale 202 en forme de cylindre droit ainsi que deux parties terminales 204 et 206 en forme de cylindre droit, ces trois parties étant disposées suivant un même axe XX. Les parties terminales 204 et 206 sont destinées à recevoir chacune une série d'enroulements dont les brins principaux sont orientés perpendiculairement à la force appliquée, c'est-à-dire perpendiculairement à l'axe XX, et la partie centrale 202 est destinée à recevoir deux séries d'enroulements dont les brins principaux sont orientés sensiblement parallèlement à la force appliquée, c'est-à-dire sensiblement parallèlement à l'axe XX.

Pour faciliter l'ancrage des enroulements ayant leurs brins principaux orientés parallèlement à la force appliquée, on usine sur la partie centrale 202 des épaulements circulaires au moyen d'un trépan 208 représenté en coupe axiale sur la fig. 20. Ce trépan est un trépan annulaire destiné à être entraîné en rotation autour de son axe et qui permet de réaliser un enlèvement annulaire dans la matière du corps d'épreuve en laissant subsister au centre de cet enlèvement de matière un épaulement circulaire.

Le trépan 208 est disposé avec son axe de rotation disposé dans le même plan que celui du corps d'épreuve mais incliné d'un angle α par rapport à la normale à l'axe XX de manière à constituer un bord d'ancrage présentant la même inclinaison.

On a réalisé sur une demi portion cylindrique 210 de la partie centrale 202 des épaulements circulaires et on aperçoit sur la fig. 21 trois épaulements circulaires 212, 214 et 216 sur un bord 218 de la portion cylindrique 210 et deux épaulements circulaires 220 et 222 sur l'autre bord 224 de cette portion 210, les épaulements étant en nombre impair sur chaque bord et étant disposés en quinconce pour permettre la mise en place d'une série d'enroulements formés d'un seul brin de fil 226.

La fig. 22 montre en coupe l'épaulement 214 de la fig. 21 et l'ancrage du fil de jauge 226 autour de cet épaulement circulaire. Du fait de l'inclinaison donnée au trépan 208, l'épaulement circulaire 214 présente un bord circulaire 228 dont la génératrice est inclinée du même angle α et permet d'assurer un bon ancrage du fil 226 qui se trouve ainsi sollicité en direction du corps d'épreuve. En outre, du fait de l'inclinaison selon un angle aigu, on trouve un angle très obtus 230 au niveau du raccordement de l'usinage avec le corps d'épreuve 202.

Le corps d'épreuve des figs 20 et 21 est destiné à recevoir quatre séries d'enroulements de fil de jauge selon la principe de bobinage décrit en référence aux figs 18 et 19.

Ce corps d'épreuve reçoit une première série d'enroulements de fil de jauge comprenant un brin AZ enroulé autour de la partie 204 et constituant un enroulement dont les brins principaux sont orientés perpendiculairement à la force appliquée. Le corps d'épreuve reçoit une deuxième série d'enroulements comprenant un brin ZA' passant alternativement autour d'un épaulement circulaire de l'un des bords 218 à un épaulement circulaire de l'autre bord 224 de la partie centrale 202, de manière à former un enroulement dont les segments principaux ont leurs brins orientés parallèlement à la force appliquée. Les épaulements des bords 218 et 220 sont disposés en quinconce, les épaulements étant en nombre impair sur le bord 218 ainsi que sur le bord 224. Les brins AZ et ZA' constituent un demi-pont de WHEATSTONE tel que représenté sur la fig. 24. Le brin AZ constitue un brin comprimé alors que le brin ZA' constitue un brin tendu.

Le corps d'épreuve de la fig. 23 reçoit également deux autres séries d'enroulements constituant l'autre demi pont de WHEATSTONE de la fig. 24. Il comporte donc un autre brin A'Z' enroulé autour de la partie terminale 206 et un brin Z'A placé autour d'épaulements disposés de façon analogue sur l'autre portion cylindrique de la partie 202. Le brin A'Z' constitue un brin comprimé et le brin Z'A constitue un brin tendu. Les brins tendus sont désignés par le symbole T et les brins comprimés par le symbole C sur la fig. 24.

La mise en place du fil de jauge sur le corps d'épreuve peut être avantageusement effectuée au moyen d'un dévidoir spécial, connu en soi, qui est tenu à la main. Ce dévidoir comporte une bobine débitrice sur laquelle est enroulé le fil de jauge et un corps creux terminé par une aiguille creuse à travers laquelle passe le fil de jauge provenant de la bobine débitrice.

Dans les exemples de réalisation décrits ci-dessus, les corps d'épreuve sont réalisés en un matériau doué de propriétés élastiques, par exemple en un alliage d'aluminium.

Les zones d'appui (saillies ou évidements) pratiquées dans le corps d'épreuve peuvent être par exemple usinées dans la masse ou être obtenues par fonderie, forgeage, matriçage, électroérosion, roulage ou tout autre technique appropriée.

Le fil résistant utilisé sera émaillé et donc isolé pour permettre d'utiliser tous métaux pour constituer le corps d'épreuve et de croiser les fils et d'avoir des spires jointives. On notera que l'utilisation d'un corps d'épreuve en alliage léger permet en revanche l'utilisation de fil nu.

On notera que la disposition du fil de jauge par demi-pont continu dans lequel un même brin de fil constitue une jauge comprimée et une jauge tendue est une caractéristique très favorable pour l'obtention d'une faible dérive de zéro du capteur. En outre, le bobinage par pont entier continu avec un seul brin de fil, s'il a pour inconvénient de nécessiter de nombreux chevauchements de fils, conserve néanmoins l'avantage de la condition d'une faible dérive de zéro.

L'avantage principal de réaliser les zones d'appui sous la forme d'épaulements réside dans leur simplicité d'usinage qui permet d'en multiplier sans difficulté le nombre et par suite de faire varier le nombre d'aller et retour du fil de jauge et de permettre ainsi d'atteindre des résistances élevées et surtout une meilleure intégration des déformations du corps d'épreuve.

Comme indiqué plus haut, le corps d'épreuve peut être avantageusement réalisé à partir d'un alliage léger anodisable, le fil de jauge venant en contact intime avec le corps d'épreuve. Du fait que les épaulements présentent un bord circulaire, il n'est alors plus nécessaire de limer des arêtes pour ne pas casser l'émail du fil. On peut envisager d'autres configurations de bobinage que celles indiquées précédemment, dans lesquelles les épaulements sont disposés en quinconce et en nombre impair.

L'invention permet la réalisation de dynamomètres industriels travaillant à la traction ou à la compression.

## Revendications

1. Dynamomètre du type comprenant un corps d'épreuve (200) déformable sous l'effet d'une force appliquée, ainsi que des moyens comprenant un fil (226) de jauge dont la résistance électrique est fonction de son état de tension et destinés à détecter cette déformation du corps d'épreuve, le fil de jauge étant branché dans un montage électrique en pont, dans la matière du corps d'épreuve (200) étant définies des zones d'appui (212, 214, 216, 218, 220, 222, 204, 206) aptes à recevoir quatre séries d'enroulements (AZ, ZA', A'Z', Z'A) dudit fil de jauge préalablement prétendu, demeurant en contact intime avec le corps d'épreuve, dont deux (ZA', A'Z) de ces séries d'enroulements possèdent des segments principaux orientés parallèlement à la force appliquée, tandis que les deux autres (AZ, A'Z') possèdent des segments principaux orientés perpendiculairement à la force appliquée, ces quatre séries d'enroulements formant le montage électrique en pont, les segments orientés parallèlement à la force appliquée se trouvant dans des bras opposés du montage en pont, de même que les segments orientés perpendiculairement à la force appliquée, caractérisé par le fait que les zones d'appui recevant les deux séries d'enroulements ayant leurs segments principaux orientés parallèlement à la force appliquée sont constitués par des épaulements circulaires (212, 214, 216, 220, 222) usinés dans la matière du corps d'épreuve (200) pour former chacun un bord circulaire (228) servant à l'ancrage du fil de jauge (226).

2. Dynamomètre selon la revendication 1, caractérisé par le fait que le bord circulaire (228) de chaque épaulement a sa génératrice inclinée sur le corps d'épreuve (200) pour former un bord de retenue incliné.

3. Dynamomètre selon l'une des revendications 1 et 2, caractérisé par le fait que chacun desdits épaulements circulaires est constitué par un enlèvement annulaire dans la matière du corps d'épreuve (200).

4. Dynamomètre selon l'une des revendications 1 à 3, dans lequel le corps d'épreuve (200) est en forme générale de prisme ou de cylindre droit, caractérisé par le fait que les épaulements (212, 214, 216, 220, 222) sont usinés sur deux bords opposés (218, 224) dudit prisme ou cylindre et que le fil de jauge (226) passe alternativement autour d'un des épaulements de l'un des bords puis autour d'un des épaulements de l'autre bord pour former une série d'enroulements (ZA', Z'A) dont les brins principaux sont orientés parallèlement à la force appliquée.

5. Dynamomètre selon la revendication 4, caractérisé par le fait que les épaulements des deux bords (218, 224) sont disposés en quinconce.

6. Dynamomètre selon l'une des revendications 4 et 5, caractérisé par le fait que les épaulements sont en nombre impair sur chacun des bords (218, 224).

## Claims

1. A dynamometer of the type having a test piece (200) deformable under the effect of an applied force, as well as means comprising a strain wire (226) of which the electrical resistance is a function of its state of tension and intended to detect the deformation of the test piece, the strain wire being connected in an electric bridge circuit, in the material of the test piece (200) being defined support zones (212, 214, 216, 218, 220, 222, 204, 206) adapted to receive four series windings (AZ, ZA', A'Z', Z'A) of the said strain wire previously tensioned, remaining in intimate contact with the test piece, of which two (ZA', A'Z) of these series windings having principal portions oriented parallel to the applied force, whilst the other two (AZ, A'Z') have principal portions oriented perpendicular to the applied force, these four series windings forming an electrical bridge circuit, the portions oriented parallel to the applied force being in opposite arms of the bridge circuit, as similarly are the portions oriented perpendicular to the applied force, characterized by the fact the support zones receiving the two series windings having their principal portions oriented parallel to the applied force are constituted by circular shoulders (212, 214, 216, 220, 222) machined into the material of the test piece (200) for each to form a circular edge (228) serving as the anchorage of the strain wire (226).

2. A dynamometer according to claim 1, characterized by the fact that the circular edge (228) of each shoulder has its generatrix inclined on the test piece (200) to form an inclined retention edge.

3. A dynamometer according to either one of claims 1 and 2, characterized by the fact that each of the said circular shoulders is constituted by an annular cutting into the material of the test piece (200).

4. A dynamometer according to any one of claims 1 to 3, in which the test piece (200) is in the general form of a prism or a right cylinder, characterized by the fact that the shoulders (212, 214, 216, 220, 222) are machined on two opposite edges (218, 224) of the said prism or cylinder and that the strain wire (226) passes alternatively around one of the shoulders of one of the edges and then around one of the shoulders of the other edge to form a series of windings (ZA', Z'A) of which the principal strands are oriented parallel to the applied force.

5. A dynamometer according to claim 4, characterized by the fact that the shoulders of the two edges (218, 224) are staggered.

6. A dynamometer according to either one of claims 4 and 5, characterized by the fact that the shoulders are of uneven number on each of the edges (218, 224).

**Patentansprüche**

1. Dynamometer, bestehend aus einem Prüfkörper (200), der unter Wirkung einer Kraft verformbar ist, sowie aus Elementen, die einen Dehnungsmessdraht (226) enthalten, dessen elektrischer Widerstand von seinem Dehnungszustand abhängt, und dazu dienen, diese Verformung des Prüfkörpers zu ermitteln; dieser Dehnungsmessdraht ist in eine Brücke geschaltet, dabei sind am Material des Prüfkörpers (200) Auflageflächen (212, 214, 216, 218, 220, 222, 204, 206) definiert, die vier Wicklungsreihen (AZ, ZA', A'Z', Z'A) dieses vorher vorgespannten Dehnungsmessdrahtes aufnehmen können, der in engem Kontakt mit dem Prüfkörper bleibt; zwei (ZA', A'Z) dieser Wicklungsreihen haben Hauptsegmente, die parallel zur wirkenden Kraft orientiert sind, während die beiden anderen (AZ, A'Z') Hauptsegmente haben, die senkrecht zur wirkenden Kraft stehen; diese vier Wicklungsreihen bilden die Brückenschaltung, wobei die parallel zur wirkenden Kraft stehenden Segmente in gegenüberliegenden Seiten der Brückenschaltung angeordnet sind, ebenso die senkrecht zur wirkenden Kraft stehenden Segmente, dadurch gekennzeichnet, dass die Auflageflächen, die die beiden Wicklungsreihen, die die parallel zur wirkenden Kraft orientierten Segmente aufnehmen, aus kreisförmigen Absätzen (212, 214, 216, 220, 222) gebildet sind, die aus dem Material des Prüfkörpers (200) gearbeitet sind, um je einen kreisförmigen Rand (228) zu bilden, der zur Ankerung des Dehnungsmessdrahtes (226) dient.

2. Dynamometer nach Anspruch 1, dadurch gekennzeichnet, dass der kreisförmige Rand (228) jedes Absatzes eine Mantellinie aufweist, die sich schräg zum Prüfkörper (200) neigt und somit einen schrägen Halterand bildet.

3. Dynamometer nach einem der Ansprüche 1 und 2, dadurch gekennzeichnet, dass jeder der genannten kreisförmigen Absätze aus einer ringförmigen Abarbeitung in dem Material des Prüfkörpers (200) gebildet ist.

4. Dynamometer nach einem der Ansprüche 1 bis 3, wobei der Prüfkörper (200) die allgemeine Form eines Prismas oder eines geraden Zylinders hat, dadurch gekennzeichnet, dass die Absätze (212, 214, 216, 220, 222) auf zwei gegenüberliegenden Kanten (218, 224) des genannten Prismas oder Zylinders vorgesehen sind und dass der Dehnungsmessdraht (226) wechselweise um einen der Absätze einer der Kanten und dann um einen der Absätze der anderen Kante gewickelt ist, um eine Reihe Wicklungen (ZA', Z'A) zu bilden, deren Hauptsegmente parallel zur wirkenden Kraft stehen.

5. Dynamometer nach Anspruch 4, dadurch gekennzeichnet, dass die Absätze der beiden Kanten (218, 224) in Fünfpunktanordnung stehen.

6. Dynamometer nach einem der Ansprüche 4 und 5, dadurch gekennzeichnet, dass die Zahl der Absätze auf jeder der Kanten (218, 224) ungerade ist.

FIG_1

FIG_2

FIG_3

FIG_4

FIG_5

FIG_6

FIG_7

FIG_8

0 035 942

FIG_9

72

76

80    84

88    90

68    70

82    86

78

74

FIG_10

68

FIG_11

76

68

78

FIG_12

80    84

M    98    Q

92    96

94

82    N    P    86

FIG_13

Q

C    T

M    P

T    C

N

0 035 942

112  114  124  116  100  122  126  118

XV

XV

156  120

**FIG_14**

158  160

152  154

150

13

0 035 942

**FIG_17**

**FIG_16**

144  146  128  148  136
104  106  100
142  130
134  138
102  108
110  132
140

**FIG_15**

0 035 942

FIG_18

FIG_19

FIG_20

FIG_21

FIG_22

FIG_23

FIG_24